# EUROPÄISCHE PATENTSCHRIFT

(11) **EP 2 240 994 B1**
(45) Veröffentlichungstag und Bekanntmachung des Hinweises auf die Patenterteilung: **13.02.2013**
(21) Anmeldenummer: 08872123.8
(22) Anmeldetag: 11.11.2008
(51) Int. Cl.: H02K 1/14, H02K 1/27, H02K 1/17

(54) **KERN FÜR EINEN ELEKTROMOTOR UND EINEN ELEKTROMOTOR MIT EINEM SOLCHEN KERN**
CORE FOR AN ELECTRIC MOTOR AND AN ELECTRIC MOTOR HAVING SUCH A CORE
NOYAU POUR MOTEUR ÉLECTRIQUE ET MOTEUR ÉLECTRIQUE POURVU D'UN TEL NOYAU

(30) Priorität: 06.02.2008 DE 102008000244
(43) Veröffentlichungstag der Anmeldung: 20.10.2010
(73) Patentinhaber: Robert Bosch GmbH, 70442 Stuttgart (DE)
(72) Erfinder: HAWIGHORST, Achim, 77830 Buehlertal (DE)
(86) Internationale Anmeldenummer: PCT/EP2008/065318
(87) Internationale Veröffentlichungsnummer: WO 2009/097919

(56) Entgegenhaltungen:
- EP-A1- 1 701 428
- WO-A-2007/048567
- WO-A-2007/145374
- WO-A1-00/74209
- DE-A1- 3 401 623
- FR-A1- 2 708 802
- GB-A- 2 376 808
- JP-A- 61 085 046
- JP-A- 61 116 960
- US-A- 3 947 710
- US-A1- 2004 130 229
- US-A1- 2006 071 574
- US-A1- 2006 279 160

## Beschreibung

### Stand der Technik

Die Erfindung betrifft einen Kern für einen Elektromotor, und einen Elektromotor mit einem solchen Kern, wobei der Kern mehrere Paketsegmente aufweist.

Aus den Stand der Technik, wie er in der US 6 977 457 offenbart ist, ist ein Elektromotor bekannt. Der Elektromotor enthält hierbei einen Rotor, der eine drehbare Welle, einen Kern und einen Kommutator aufweist. Der Kern enthält mehrere sich radial erstreckende Zähne und einen Ring. Der Ring verbindet dabei die radial inneren Enden der Zähne. Hierzu ist der Ring mit keilförmigen Aussparungen versehen, in welche die radial inneren Enden der Zähne eingeführt und befestigt werden. Der Hauptkörper der Zähne wird dabei jeweils mit Draht umwickelt, bevor der jeweilige Zahn an dem Ring befestigt wird. Eine solcher Elektromotor hat jedoch den Nachteil, dass der Ring und die Zähne des Kerns verhältnismäßig aufwendig in der Herstellung sind, da der Ring mit keilförmigen Aussparungen versehen werden muss und des Weiteren die Zähne mit einem dazu passenden keilförmigen Ende. Hierbei muss zudem eine ausreichende Klemmwirkung der Zähne in den keilförmigen Aussparungen des Rings sichergestellt sein, um ein Wackeln oder ungewolltes Herausfallen der Zähne zu verhindern. Des Weiteren muss eine separate Halterung vorgesehen werden, um den Kern mit den Zähnen zu befestigen.

Aus CB 2376808 A und US 2006/0279160 A sowie aus JP 61116960 A ist ein Kern für einen Elektromotor bekannt, wobei der Kern mehrere Paketsegmente aufweist, wobei das jeweilige Paketsegment jeweils wenigstens eine Öffnung aufweist, um auf jeweils wenigstens ein Stangenelement eines Gehäuseteils eines Elektromotors aufschiebbar zu sein.

Aus US 2004/0130229 A1 ist ein Elektromotor mit einem inneren und einem äußeren Rotor bekannt, die koaxial angeordnet sind. Es ist ein Stator vorgesehen, der einen Statorkern aufweist, wobei der Statorkern in Form von ringförmigen Statorstücken aufgebaut ist. Die Statorstücke sind übereinander angeordnet und mit Hilfe eines Bolzens zwischen Anschlägen befestigt.

Aus FR 2 708 802 A1 ist ein Kern für einen Elektromotor bekannt, der mehrere Paketsegmente aufweist. Die Paketsegmente sind seitlich durch Stangenelemente eines Gehäuseteils eines Elektromotors eingefasst. Das jeweilige Paketsegment weist eine Halterung auf, auf deren Innenseite ein Magnet befestigt ist. Die Magnete weisen seitliche Konturen auf, die an den Stangenelementen anliegen.

Aus DE 34 01 623 A1 ist ein Kern für einen Elektromotor bekannt, der mehrere Paketsegmente aufweist. Das jeweilige Paketsegment weist jeweils wenigstens eine Öffnung auf, in die ein Stangenelement einschiebbar ist. Das jeweilige Paketsegment weist eine Halterung auf, auf deren Innenseite ein Magnet befestigt ist. Der Magnet weist eine Öffnung auf, durch die eine Schraube senkrecht zu einer Drehachse des Elektromotors geführt wird und am Paketsegment befestigt wird. Eine entsprechende Anordnung ist auch aus US 3,947,710 A bekannt.

WO 00/74209 A1 weist eine Anordnung für einen Kern eines Elektromotors mit Paketsegmenten und mit Magneten auf, wobei die Magnete seitlich von Stangenelementen des Gehäuseteils des Elektromotors gehalten werden.

Gemäß der vorliegenden Erfindung, wie in Anspruch 1 beansprucht, wird daher ein Kern für einen Elektromotor bereitgestellt, der einfach und kostengünstig in der Herstellung und außerdem leicht zu montieren ist. Der Kern weist hierbei mehrere Paketsegmente auf, welche jeweils mit einem Magneten versehbar sind, wobei das jeweilige Paketsegment wenigstens eine oder mehrere Öffnungen aufweist, um auf wenigstens ein oder mehrere Stangenelemente eines Gehäuseteils eines Elektromotors aufgeschoben und daran befestigt zu werden. Dazu weist der Magnet wenigstens eine Öffnung auf, durch die das wenigstens eine Stangenelement geschoben wird. Das wenigstens eine Stangenelement und die wenigstens eine Öffnung sind parallel zur Drehachse des Elektromotors angeordnet. Gemäß der erfindungsgemäßen Ausführungsform weist das jeweilige Paketsegment eine Halterung auf, auf deren Innenseite ein Magnet (z.B. ein Dauermagnet) befestigt ist, wobei der Magnet die Öffnung zum Hindurchführen der Stangenelemente des Gehäuseteils aufweist. Der Magnet kann an der Halterung mittels Verkleben, Verrasten und/oder Verschrauben angebracht werden, um nur einige Beispiele zu nennen. Ein Kern mit solchen Paketsegmenten kann beispielsweise bei einem elektrisch kommutierten Motor mit Außenwicklung eingesetzt werden. Ein solcher Kern hat den Vorteil, dass die Öffnungen der Paketsegmente sehr einfach und kostengünstig herzustellen sind. Des Weiteren müssen die Paketsegmente nur auf Stangenelemente eines Gehäuseteils des Elektromotors aufgeschoben werden. Dies spart zusätzlichen Platz ein. Des Weiteren ist keine komplizierte Klemmung notwendig, wie bei dem zuvor beschriebenen Stand der Technik, um die Paketsegmente zu halten.

Vorteilhafte Ausgestaltungen und Weiterbildungen der Erfindung ergeben sich aus den Unteransprüchen sowie der Beschreibung unter Bezugnahme auf die Zeichnungen.

In einer bevorzugten erfindungsgemäßen Ausführungsform ist die Öffnung an dem Paketsegment beispielsweise eckig, oval oder kreisförmig ausgebildet, um auf ein Stangenelement mit einem entsprechenden eckigen, ovalen oder kreisförmigen Durchmesser aufgeschoben zu werden. Eine eckige oder ovale Öffnung bzw. ein entsprechende zugeordneten Durchmesser des Stangenelements hat den Vorteil, dass das Paketsegmente sich in der Öffnung nicht drehen kann. Grundsätzlich kann die Öffnung und der dazu korrespondierende Durchmesser des Stangenelements beliebig variiert werden.

In einer weiteren erfindungsgemäßen Ausführungsform besteht das jeweilige Paketsegment aus wenigstens einem oder mehreren Blechteilen und/oder aus einem massiven Körper oder mehreren zusammengesetzten Körpern, beispielsweise aus einem Sintermaterial. Eine Bildung des Paketsegments beispielsweise aus Blech hat den vorteil, dass das Paketsegment verhältnismäßig leicht ist. Ein Paketsegment beispielsweise aus cinem Sintermaterial hat den Verteil, dass kompliziertere Formen damit realisiert werden können.

In einer anderen erfindungsgemäßen Ausführungsform kann ein Elektromotor miL dem zuvor beschriebenen Kern versehen werden. Der Elektromotor weist hierbei das Gehäuseteil mit den Stangenelementen auf, auf welche die Paketsegmente des Kerns aufgeschoben bzw. aufgesteckt werden können. Des Weiteren weist der Elektromotor eine drehbare Welle auf die mit dem Gehäuseteil miL den Paketsegmenten verbunden ist. Als Abschluss des Gehäuseteils kann ein Deckelelement vorgesehen werden, das an den Gehäuseteil befestigbar ist. Das Deckelelement weist hierzu entsprechende Öffnungen oder Vertiefungen auf, in die die Enden der Stangenelemente des Gehäuseteils durchgeführt bzw. eingeführt werden. Die Enden der Stangenelemente können beispielsweise an dem Deckelelement umgeformt werden, so dass sie dieses halten und/oder mit diesem verklebt und/oder verrastet werden. Auf diese Weise kann beispielsweise ein ungewolltes Herausrutschen der Paketsegmente nach unten verhindert werden.

In einer weiteren erfindungsgemäßen Ausführungsform weist das Gehäuseteil an seinem Boden eine Öffnung oder einen rohrförmigen Abschnitt auf, durch welche bzw. durch welchen die Welle des Elektromotors hindurchführbar ist. Dabei kann wahlweise an dem Gehäuseteil und dem Deckelelement zusätzlich jeweils eine Aussparung bzw. Vertiefung für ein Lager vorgesehen werden, zur Lagerung der Welle, beispielsweise ein Wälzlager oder ein Gleitlager.

Gemäß einer anderen erfindungsgemäßen Ausführungsform kann die Welle des Elektromotors an dem Gehäuseteil auch angeformt oder als separates Teil daran befestigt sein. Auf diese Weise kann beispielsweise im Inneren des Gehäuseteils ein erheblicher Platz freigehalten werden, der für andere Zwecke genutzt werden kann. Des Weiteren benötigen das Gehäuseteil und das Deckelelement keine Durchführungen bzw. Lagerungen für die Welle, so dass Kosten gesenkt werden können.

In einer weiteren erfindungsgemäßen Ausführungsform ist das Deckelelement an seinem Umfang mit den Öffnungen bzw. Vertiefungen zum Aufnehmen der Stangenelemente des Gehäuseteils versehen. Das Deckelelement kann zum Hindurchführen der Welle, wenn diese nicht an dem Gehäuseteil selbst ausgebildet ist, mit einer Öffnung zum Hindurchführen der Welle vorgesehen sein. Das Deckelelement kann hierbei eine Scheibenform mit einer Öffnung oder einen rohrförmigen Abschnitt aufweisen. Alternativ kann das Deckelelement auch mit einem rohrförmigen Stützabschnitt zum Hindurchführen der Welle und wahlweise gleichzeitigen Stützen des Gehäuseteils versehen sein. Der Stützabschnitt kann dabei in seiner Länge derart ausgebildet sein, dass er mit seinem Ende an dem Boden des Gehäuseteils anliegt oder aber zu diesem beabstandet ist. Des Weiteren kann der Stützabschnitt einen Durchmesser aufweisen, der ausreichend groß ist, so dass die Paketabschnitte mit ihrem inneren Ende beispielsweise daran anliegen. Der Durchmesser kann aber auch kleiner gewählt werden.

In einer anderen erfindungsgemäßen Ausführungsform ist ein Rotorgehäuse an der Welle des Elektromotors ausgebildet oder alternativ an dieser separat befestigt. An dem Rotorgehäuse können dabei auf der Innenseite gegenüberliegend zu den Paketsegmenten Magnete vorgesehen sein. Ein solche Anordnung kann beispielsweise bei einem Elektromotor als Außenläufer verwendet werden.

Gemäß einer weiteren erfindungsgemäßen Ausführungsform weist der Kern des Elektromotors wenigstens zwei oder mehr bzw. eine Vielzahl von Paketsegmenten auf.

Ausführungsbeispiele der Erfindung sind nachstehend anhand der schematischen Figuren der Zeichnung näher erläutert. Es zeigen:
Figur 1 eine Draufsicht eines Kerns mit mehreren Paketsegmenten, insbesondere für einen Elektromotor;
Figur 2 den Kern gemäß Fig. 1, wobei dessen Paketsegmente auf ein Gehäuseteil mit Stangenelementen eines Elektromotors aufgeschoben sind,
Figur 3 ein Gehäuseteil mit Stangenelementen in einer Draufsicht,
Figur 4 eine Ausführungsform des Gehäuseteils mit Stangenelementen in einer Schnittansicht;
Figur 5 eine weitere Ausführungsform des Gehäuseteils mit Stangenelementen in einer Schnittansicht;
Figur 6 ein Deckelelement als Abschlussplatte für das Gehäuseteil in einer Draufsicht;
Figuren 7 und 8 zwei Ausführungsformen des Deckelelements in einer Schnittansicht;
Figuren 9 und 10 eine Ausführungsform des Deckelelements mit einem Stützabschnitt in einer Draufsicht und einer Schnittansicht;
Figur 11 das Deckelelement gemäß den Figuren 9 und 10 in eingebautem Zustand in dem Gehäuseteil gemäß Fig. 5;
Figuren 12 bis 16 Ausführungsbeispiele für die Außenkonturen der äußeren Enden der Paketsegmente;
Figuren 17 und 18 ein Ausführungsbeispiel eines Rotors eines Innenläufers in einer Vorderansicht und einer Schnittansicht, wobei der Rotor einen Kern mit Paketsegmenten aufweist;
Figur 19 ein weiteres Ausführungsbeispiel eines Rotors eines Innenläufers in einer Schnittansicht, wobei der Rotor einen Kern mit Paketsegmenten aufweist;
Figur 20 einen Kern mit Paketsegmenten, die jeweils mit einer Wicklung versehen sind und auf ein Gehäuseteil mit Stangenelementen eines Elektromotors aufgeschoben sind;
Figur 21 einen Motor als Außenläufer in einer Schnittansicht, wobei der Motor einen Stator mit einem Kern mit Paketsegmenten aufweist;
Figur 22 einen Kern mit Paketsegmenten eines elektrisch kommutierten Motors mit Außenwicklung in einer Draufsicht; und
Figur 23 eine Vorderansicht eines Motors mit einem Rotor, wobei der Rotor einen Kern, wie er in Figur 22 gezeigt ist, aufweist.

In den Figuren bezeichnen gleiche Bezugszeichen gleiche oder funktionsgleiche Komponenten, soweit nichts Gegenteiliges angegeben ist.

Im folgenden wird der Aufbau eines Kerns mit Paketsegmenten anhand von Beispielen beschrieben, sowie ein Elektromotor bzw. dessen Rotor bzw. Stator mit einem solchen Kern. Gemäß der Erfindung ist der Kern eines Motors aus Segmenten bzw. Paketsegmenten zusammengesetzt. Dadurch ist es möglich die Form der Paketoberfläche für den individuellen Bedarf zu gestalten. Die Paketsegmente werden dabei auf ein Gehäuseteil bzw. Formteil des Rotors bzw. Stators eines Elektromotors aufgesteckt, wobei als Abschlussplatte ein Deckelelement vorgesehen werden kann, das beispielsweise mit dem Rotor bzw. Stator bzw. mit dem Gehäuseteil verbunden wird. Das Deckelelement kann hierbei lediglich zur Erhöhung der Stabilität genutzt werden. Alternativ kann es auch als Halterung für eine Ankerwelle verwendet werden, oder zusätzlich ein Lager integrieren, wie im nachfolgenden noch anhand der Figuren gezeigt wird. Das Gehäuseteil selbst hat die Funktion die Paketsegmente zusammenzuhalten und das Drehmoment auf die Ankerwelle eines Motors zu übertragen. Die Ankerwelle kann jedoch auch eingespart werden. Dabei wird der Kommutator beispielsweise auf das Gehäuseteil fixiert.

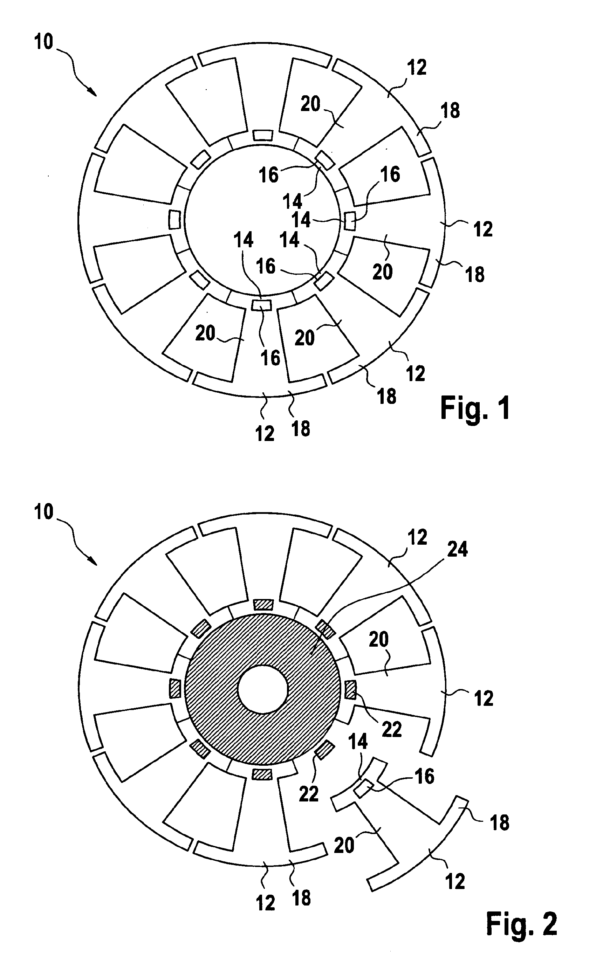

Fig. 1 zeigt eine Draufsicht auf einen Kern 10 für einen Elektromotor gemäß einer ersten Ausführungsform, die nicht von der Erfindung erfasst ist. Der Kern 10 ist dabei beispielsweise aus acht Paketsegmenten 12 zusammengesetzt. Die Paketsegmente 12 weisen dabei jeweils ein erstes, inneres Ende 14 mit einer Öffnung 16 auf, um auf ein zugeordnetes Stangenelement eines Gehäuseteiles bzw. Formteils aufgesteckt zu werden. Wahlweise könne auch zwei und mehr Öffnungen 16 vorgesehen werden, um das Paketsegment 12 entsprechend auf zwei und mehr Stangenelemente 22 aufzuschieben. Das zweite, äußere Ende 18 der Paketsegmente 12 weist wiederum beispielsweise einen verbreiterten Abschnitt auf. Zwischen den beiden Enden 14, 18 ist darüber hinaus ein Wickelungsabschnitt 20 vorgesehen, welcher mit einer Drahtwicklung versehen wird. Der äußere verbreiterte Abschnitt 18 verhindert beispielsweise ein ungewolltes Abrutschen der Wicklung und/oder sorgt wahlweise zusätzlich für einen Abstand zwischen benachbarten Drahtwicklungen, so dass diese sich nicht berühren. Die Drahtwicklung kann hierbei beispielsweise vor dem Befestigen des Paketsegments an dem Gehäuseteil vorgesehen werden oder danach, sofern ausreichend Platz vorhanden ist. Das Paketsegment 12 bzw. dessen beide Enden 14, 18 und der Wicklungsabschnitt 20 können beispielsweise aus Blech bzw. einem oder mehreren Blechteilen gebildet sein und/oder einen massiven Körper beispielsweise aus einem Sintermaterial aufweisen oder aus mehreren dieser Körper zusammengesetzt sein. Das Sintermaterial ist dabei lediglich ein Beispiel für ein Material, aus dem das Paketsegment 12 hergestellt werden kann. Es können aber auch beispielsweise andere geeignete Materialien oder Materialkombination verwendet werden.

In Fig. 2 ist der Kern 10 gemäß Fig. 1 gezeigt, wobei sieben Paketsegmente 12 auf jeweils ein zugehöriges Stangenelement 22 eines Gehäuseteils 24 aufgesteckt sind. Ein achtes Paketsegment 12 wird, nachdem es beispielsweise mit einer Drahtwicklung versehen wurde, ebenfalls an einem zugeordneten Stangenelement 22 des Gehäuseteils 24 befestigt. Hierzu wird das Paketsegment 12 mit seiner Öffnung 16 bzw. Aufnahmebohrung auf das Stangenelement 22 aufgesteckt bzw. aufgeschoben. Die Wicklungen der Paktsegmente 12 wurde aus Gründen der Übersichtlichkeit in Fig. 2 weggelassen. Zum Befestigen der Paketsegmente 12 können beispielsweise die Enden 34 der Stangenelemente 22 des Gehäuseteils entsprechend umgeformt, beispielsweise umgebogen werden oder aufgespreizt und auseinander gebogen werden. Dies sind jedoch lediglich Beispiele auf welche die Erfindung nicht beschränkt ist. Wahlweise kann auch zusätzlich ein Deckelelement vorgesehen werden, zum Halten der Paketsegmente 12. Dies wird im Nachfolgenden anhand der Figuren noch näher beschrieben.

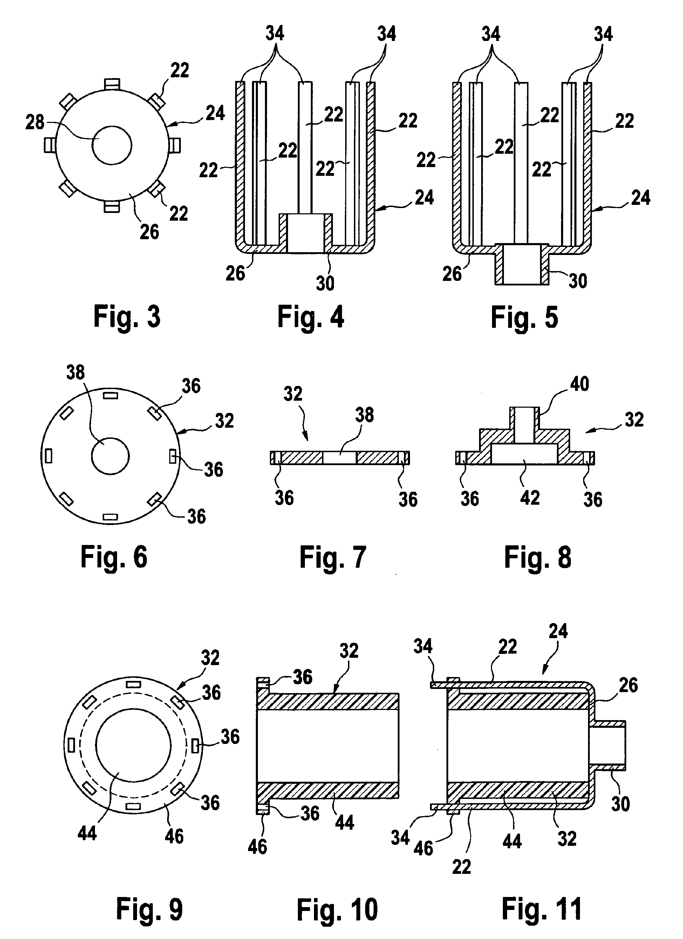

In Fig. 3 ist ein Ausführungsbeispiel des Gehäuseteils 24 mit seinen Stangenelementen 22 zur Aufnahme der Paketsegmente 12 in einer Draufsicht dargestellt. Das Gehäuseteil 22 weist hierbei beispielsweise einen flachen Boden 26 mit einer Öffnung 28 zur Durchführung einer Welle, beispielsweise eines Elektromotors, auf. Die Stangenelemente 22 erstrecken sich hierbei beispielsweise senkrecht von dem Boden 26 des Gehäuseteils 24 nach oben. Der Durchmesser der Stangenelemente 22 ist hierbei z.B. eckig bzw. rechteckig. Er kann jedoch einen beliebigen Durchmesser aufweisen.

Ein weiteres Ausführungsbeispiel des Gehäuseteils 24 ist in Fig. 4 in einer Schnittansicht gezeigt. Die Stangenelemente 22 erstrecken sich dabei senkrecht von dem Boden 26 des Gehäuseteils 24 und sind mit diesem einstückig ausgebildet oder als separate Teile an diesem befestigt (nicht dargestellt). In seiner Mitte weist das Gehäuseteil 24 einen rohrförmigen Abschnitt 30 bzw. eine rohrförmige Öffnung auf, durch die eine Welle hindurchführbar ist. Der rohrförmige Abschnitt 30 kann sich dabei beispielsweise nach oben in Richtung der Stangenelemente 22 des Gehäuseteils 24 erstrecken oder nach unten, auf der anderen Seite der Stangenelemente 22, wie in Fig. 5 gezeigt ist. Grundsätzlich kann sich der rohrförmige Abschnitt 30 auch zu beiden Seiten des Gehäuseteils 24 erstrecken, d.h. nach oben und nach unten (nicht dargestellt).

In Fig. 6 und 7 ist ein Ausführungsbeispiel eines Deckelelements 32 als Abschlussplatte für das Gehäuseteil 24 in einer Draufsicht und in einer Schnittansicht dargestellt. Das Deckelelement 32 wird dabei als Abschluss auf die Stangenelemente 22 an deren Ende 34 aufgesetzt. Das Deckelelement 32 weist hierzu entsprechende Öffnungen 36, beispielsweise in Form von Durchgangsbohrungen auf, die auf die Stangenelemente 22 aufgesteckt werden. Alternativ können in dem Deckelelement 32 statt der Öffnungen 36 auch beispielsweise Vertiefungen (nicht dargestellt) oder Vorsprünge (nicht dargestellt) ausgebildet werden, in die bzw. auf die die Stangenelement 22 gesteckt werden. Weiter weist das Deckelelement 32 zum Hindurchführen der Welle eines Motors eine entsprechende Öffnung 38 in seiner Mitte auf.

In Fig. 8 ist eine weitere Ausführungsform des Deckelelements 32 in einer Schnittansicht gezeigt. Das Deckelement 32 weist dabei an seinem Umfang Durchgangsöffnungen 36 auf, um die Stangenelemente 22 des Gehäuseteils 24 aufzunehmen und daran befestigt zu werden. Des Weiteren weist das Deckelelement 32 einen rohrförmigen Abschnitt 40 zum Hindurchführen der Welle eines Motors auf. Wahlweise kann das Deckelelement 32 zusätzlich mit einer Aufnahme bzw. Vertiefung 42 für ein Lager versehen sein, um die Welle entsprechen zu lagern. Als Lager kann dabei beispielsweise ein Wälzlager oder ein Gleitlager vorgesehen werden.

In einer weiteren Ausführungsform des Deckelelements 32, wie es in den Fig. 9, 10 und 11 gezeigt ist, weist das Deckelelement 32 einen rohrförmigen Stützabschnitt 44 (gestrichelte Linie in Fig. 9) auf, der an seinem Umfang mit einem Flanschabschnitt 46 versehen ist. Der Flanschabschnitt 46 weist hierbei Durchgangsöffnung 36 auf, um auf die Enden 34 der Stangenelemente 22 eines Gehäuseteils 24 eines Motors aufgeschoben zu werden, wie in der Schnittansicht in Fig. 11 gezeigt ist. Der rohrförmige Stützabschnitt 44 wird, wie in Fig. 11 dargestellt ist, dabei zwischen die Stangenelemente 22 bzw. die ersten, inneren Enden der Paketsegmente (nicht dargestellt) des Gehäuseteils 24 geschoben. Durch den Stützabschnitt 44 kann dabei beispielsweise zusätzlich die Stabilität des Gehäuseteils 24 und der daran befestigten Paketsegmente 12 erhöht werden bzw. die Steifigkeit des Gehäuseteils 24. Der rohrförmige Stützabschnitt 44 des Deckelelements 32 kann in seiner Länge derart ausgebildet werden, dass er in eingebautem Zustand an dem Boden 26 des Gehäuseteils 24 anstößt, wie in Fig. 11 gezeigt ist, dies ist aber nicht notwendig. Des Weiteren kann der rohrförmige Stützabschnitt 44 mit seinem Umfang an dem ersten, inneren Ende der Paketsegmente anliegen bzw. im Wesentlichen anliegen oder es kann ein vorbestimmter Spalt zwischen den Enden der Paketsegmente und dem Stützabschnitt 44 vorgesehen sein.

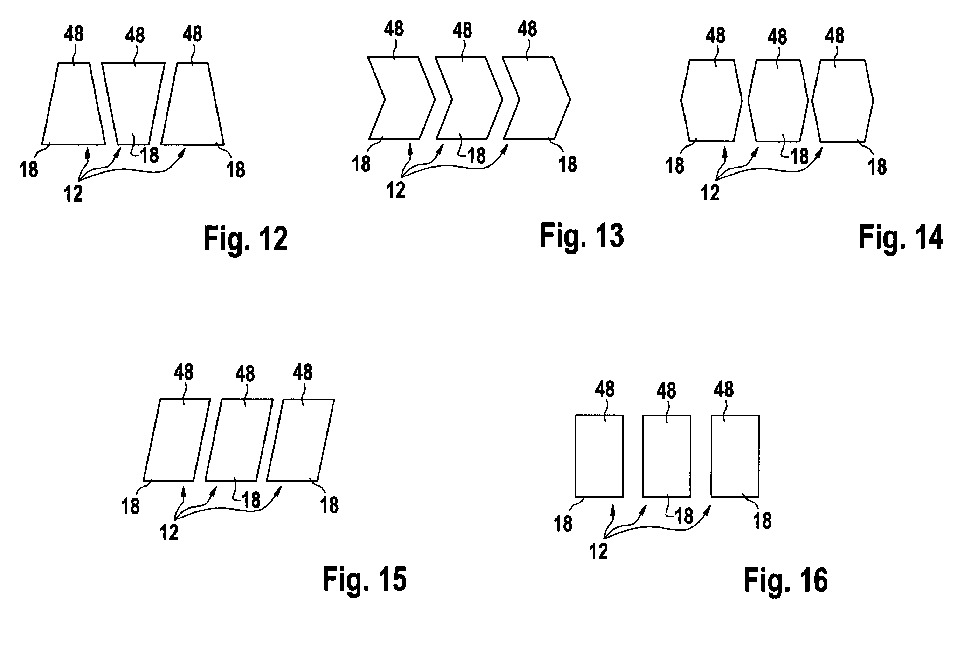

In den Fig. 12 bis 16 sind mehrere Beispiele für die Außenkontur 48 des zweiten, äußeren Endes 18 der Paketsegmente 12 gezeigt. Wie in Fig. 12 gezeigt ist, kann die Außenkontur 48 beispielsweise trapezförmige ausgebildet sein, wobei die beiden Seiten der Außenkontur im gleichen Winkel oder unterschiedlich stark geneigt sein können. In Fig. 13 ist des Weiteren die Außenkontur 48 des zweiten, äußeren Endes 18 der Paketsegmente 12 aus zwei Parallelogrammen zusammengesetzt, wobei die beiden Parallelogramme auf einer Seite einen dreieckigen Vorsprung bilden und auf der anderen Seite eine dreieckige Vertiefung. Weiter ist in Fig. 14 die Außenkontur 48 des zweiten, äußeren Endes 18 der Paketsegmente 12 aus zwei Trapezen zusammengesetzt, wobei die Trapeze hierbei gleich ausgebildet sind oder auch eine unterschiedliche Form aufweisen können (nicht dargestellt). In Fig. 15 und 16 ist die Außenkontur 48 des zweiten, äußeren Endes 18 der Paketsegmente 12 als Parallelogramm ausgebildet, wobei das Parallelogramm in Fig. 16 einen Winkel von jeweils 90° aufweist und das Parallelogramm in Fig. 15 jeweils einen Winkel von ungleich 90°. Grundsätzlich kann die Außenkontur 48 auch jede andere Form aufweisen. Neben einer eckigen Form kann auch eine runde Form oder eine Kombination aus eckigen und runden Formen vorgesehen werden. Des Weiteren können Paketsegmente 12, wie in den Fig. 12 bis 16 gezeigt ist, mit den gleichen Außenkonturen 48 aneinander gereiht werden. Grundsätzlich können die Außenkonturen 48 von Paketsegmenten 12 eines Kerns 10 auch beliebig miteinander variiert werden.

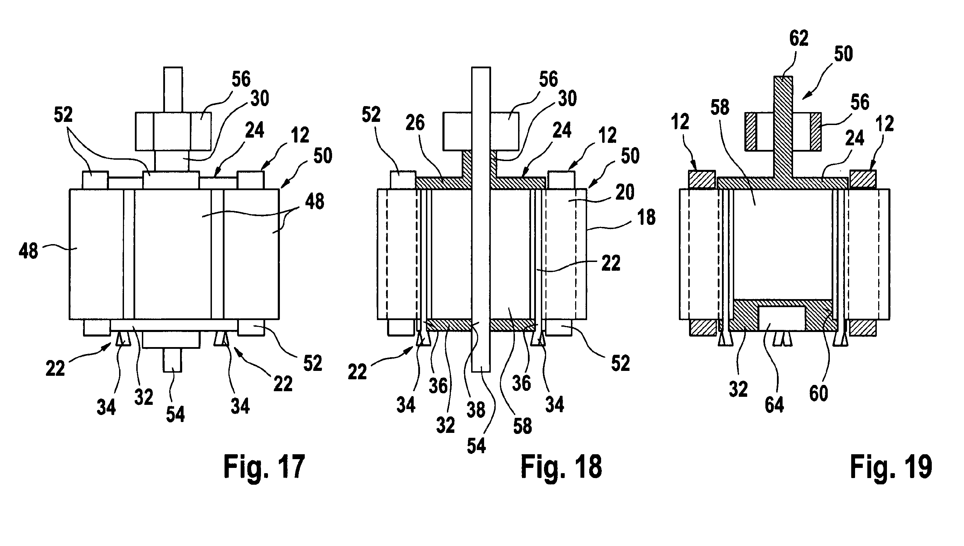

In Fig. 17 ist eine Vorderansicht eines Rotors 50 eines Elektromotors gezeigt und in Fig. 18 eine entsprechende Schnittansicht durch den Rotor 50. Der Rotor 50 weist dabei ein Gehäuseteil 24 auf mit Stangenelementen 22, wobei auf die Stangenelemente 22 jeweils ein zugeordnetes Paketsegment 12 aufgeschoben ist. Genauer gesagt wird das jeweilige Stangenelement 22 durch die Öffnung 16 des ersten, inneren Endes 14 des jeweiligen Paketsegmentes 12 geschoben, wie in Fig. 18 gezeigt ist. Die Paketsegmente 12 werden dabei in ihrem Wicklungsabschnitt mit einer Drahtwicklung 52 versehen. Das zweite, äußere Ende 18 der Paketsegmente 12 weist hierbei beispielsweise eine rechteckige Außenkontur 48 auf, wie zuvor bereits mit Bezug auf Fig. 16 beschrieben wurde. Das Gehäuseteil 24 ist in Fig. 17 und 18 an seinem unteren Ende mit einem flachen, scheibenförmigen Deckelelement 32 verschlossen. Das Deckelelement 32 weist dabei Durchgangsöffnungen 36 auf, durch die die Enden 34 der Stangenelemente 22 hindurchgesteckt sind. Die untere Enden 34 der Stangenelemente 22 werden, nachdem sie in die jeweilige Öffnung 36 des Deckelelements 32 eingeführt wurden, an diesem beispielsweise durch Verformen bzw. plastisches Verformung befestigt. Im vorliegenden Fall, wie er in den Fig. 17 und 18 gezeigt ist, sind die Stangenelemente 22 an ihrem unteren Ende 34 beispielsweise gespreizt und auseinander gedrückt. Wahlweise oder alternativ können die Stangenelemente 22 auch in den Öffnung 36 oder auch Vertiefungen bzw. Vorsprüngen (nicht dargestellt) des Deckelelements 32 beispielsweise mittels Kleben befestigt werden oder darin eingerastet werden (nicht dargestellt). Eine Welle 54 zum Drehen des Rotors 50 ist durch eine Öffnung 38 des Deckelelements 32 und einen rohrförmigen Abschnitt 30 des Gehäuseteils 24 geführt. Dabei kann am Ende des rohrförmigen Abschnitts 30 des Gehäuseteils 24 des Weiteren ein Stromwender bzw. Kommutator 56 angeordnet werden. Der Raum 58 im Inneren des Rotors 50 kann beispielsweise freigelassen werden, wie in Fig. 18 gezeigt ist oder anderweitig genutzt werden.

In Fig. 19 ist eine weitere erfindungsgemäße Ausführungsform eines Rotors 50 dargestellt. Der Rotor 50 unterscheidet sich hierbei von dem Rotor 50 gemäß Fig. 17 und 18 dadurch, dass statt eines flachen Deckelelements 32 ein abgestuftes Deckelelement 32 verwendet wird. Hierbei sind die Paketsegmente 12 zusätzlich an dem Umfang des Deckeelements 32 bzw. an dessen Stufe bzw. Aussparung 60 abgestützt. Des Weiteren ist an dem oberen Ende des Gehäuseteils 24, wie es in Fig. 19 dargestellt ist, eine Welle 62 zum Drehen des Rotors 50 angeformt. Das Deckelelement 32 und das Gehäuseteil 24 weisen daher keine Öffnung zum Hindurchführen einer Welle 54 auf, wie beispielsweise in den Fig. 17 und 18. Stattdessen weist das Deckelelement 32 beispielsweise auf der Außenseite lediglich eine Vertiefung 64 auf, um das Deckelelement 32 z.B. weniger massiv auszubilden. Auf der Außenseite des Gehäuseteils 24, ist um die daran angeformte Welle 62 beispielsweise ein Stromwender bzw. Kommutator 56 angeordnet.

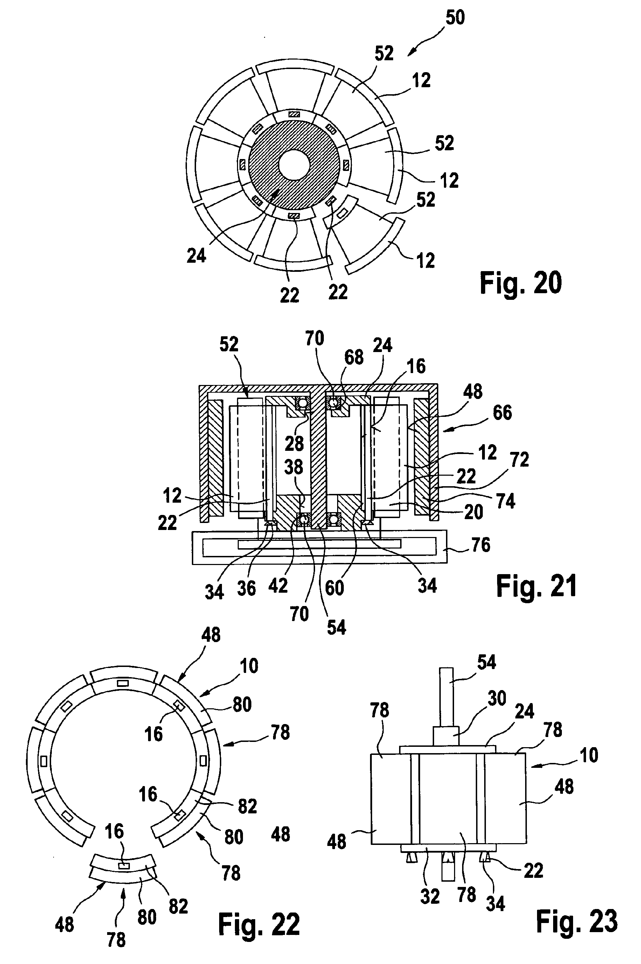

Fig. 20 zeigt weiter einen Rotor 50 eines Außenläufers in einer Draufsicht einer Ausführungsform, die nicht zur Erfindung gehört, wobei beispielsweise kein Stromwender bzw. Kommutator vorgesehen ist. Der Rotor 50 enthält mehrere Paketsegmente 12, beispielsweise acht Paketsegmente 12, die auf Stangenelementen 22 eines Gehäuseteils 24 aufgeschoben sind bzw. werden. Es können auch mehr als acht oder weniger als acht Paketsegmente 12 vorgesehen werden, je nach Funktion und Einsatzzweck. Dies gilt für alle Ausführungsformen der Erfindung. Die Paketsegmente 12 sind dabei beispielsweise mit einer Wicklung 52 versehen, d.h. einer Wicklung für elektrisch kommutierte Motoren. Als Wicklung 52 kann hierbei z.B. eine Einzellamellenwicklung vorgesehen werden. Die Wicklung 52 kann dabei vor der Befestigung an den Stangenelementen 22 angebracht werden, wie in Fig. 21 gezeigt ist, oder danach, zumindest an einem Teil der Paketsegmente 12, sofern ausreichend Platz vorhanden ist.

In Fig. 21 ist des Weiteren eine nicht von der Erfindung erfasste Ausführungsform mit einem Motor 66 als Außenläufer in einer Schnittansicht dargestellt. In dem Gehäuse des Motors 66 bzw. an dessen Stator ist ein Gehäuseteil 24 mit Stangenelementen 22 angeordnet, an welchen Paketsegmente 12 befestigt sind. Die Paketsegmente 12 weisen dabei an ihrem ersten, inneren Ende 14 entsprechende Öffnung 16 auf, mit welchen sie auf die Stangenelemente 22 des Gehäuseteils 24 aufgesteckt werden. An ihrem Wickelungsabschnitt 20 sind die Paketsegmente 12 hierbei beispielsweise mit einer Drahtwicklung 52 versehen. Die Außenkontur 48 des zweiten, äußeren Endes 18 der Paketsegmente 12 kann beispielsweise wie in den Fig. 12 bis 16 gezeigt ausgestaltet sein. Im vorliegenden Fall, wie er in Fig. 21 gezeigt ist weist das Gehäuseteil 24 neben einer Öffnung 28 zum Hindurchführen einer Welle 54 eine entsprechende Vertiefung 68 auf, in welcher ein Lager 70 zum Lagern der Welle 54 angeordnet ist. An seiner Unterseite ist das Gehäuseteil 24 mit einem Deckelelement 32 verschlossen. Die Enden 34 der Stangenelemente 22 des Gehäuseteils 24 sind dabei durch entsprechende Öffnungen 36 im Deckelelement 32 hindurchgeführt und außen beispielsweise entsprechend plastisch verformt, um das Deckelelement 32 zu befestigen. Das Deckelelement 32 weist hierbei neben einer Öffnung 38 zum Hindurchführen einer Welle 54 zusätzlich auf seiner Außenseite oder wahlweise auch auf seiner Innenseite eine Vertiefung 42 auf in welcher ein Lager 70 angeordnet ist, um die Welle 54 zu lagern.

Die Integration der Lagerung in das Gehäuseteil 24 bzw. das Deckelelement 32 bzw. in den Stator oder wahlweise auch in einen Rotor hat den Vorteil, dass dadurch der Bauraum des Motors reduziert werden. Des Weiteren weist das Deckelelement 32 eine Aussparung 60 bzw. einen umlaufenden Absatz auf seiner Innenseite auf, auf welcher die Paketsegmente 12 wahlweise zusätzlich abgestützt werden können. Die Welle 54 des Motors ist zusätzlich mit einem Polgehäuse 72 verbunden. Das Polgehäuse 72 umgibt dabei die Paketsegmente 12 und weist auf seiner Innenseite, den Paketsegmenten 12 gegenüberliegend, entsprechende Magnete 74 auf. An der Unterseite des Polgehäuses 72 bzw. des Deckelelements 32 ist des Weiteren eine Steuereinrichtung 76 vorgesehen zum Steuern des elektrisch kommutierten Motors.

In Fig. 22 ist eine erfindungsgemäße Ausführungsform eines Kerns 10 mit Paketsegmenten 78 dargestellt. Das Paketsegment 78 ist dabei ein Paketsegment 78 für einen elektrisch kommutierten Motor mit Außenwicklungen. Im vorliegenden Fall weist das jeweilige Paketsegment 78 eine Außenschale bzw. Halterung 80 auf, auf deren Innenseite ein jeweiliger Magnet 82 befestigt ist, beispielsweise mittels Klebstoff oder einem anderen geeigneten Befestigungsmittel. Der Magnet 82 ist dabei mit einer Öffnung 16 versehen, mit welcher er auf ein Stangenelement eines Gehäuseteils aufgesteckt werden kann, vergleichbar den zuvor beschriebenen Paketsegmenten 78. Ein Kern 10 eines Rotors eines elektrisch kommutierten Motors kann sich dabei, wie in Fig. 22 gezeigt ist, aus acht solchen Paketsegmenten 78 zusammensetzten.

In Fig. 23 ist ein Rotor mit dem in Fig. 22 dargestellten Kern 10 und seinen Paketsegmenten 78 gezeigt. Der Rotor weist hierbei ein Gehäuseteil 24 mit entsprechenden Stangenelementen 22 auf, auf denen die Paketsegmente 78, wie sie in Fig. 22 gezeigt sind, aufgesteckt sind. Das Gehäuseteil 24 weist an seiner Außenseite des Weiteren eine rohrförmige Öffnung bzw. einen rohrförmigen Abschnitt 30 auf, durch den eine Welle 54 hindurchgeführt ist. Auf der Unterseite ist das Gehäuseteil 24 über ein Deckelelement 32 verschlossen. Das Deckelelement 32 weist hierzu entsprechende Öffnungen auf, durch die die Enden 34 der Stangenelemente 22 des Gehäuseteils 24 hindurchgesteckt und anschließend verformt bzw. umgebogen werden, um das Deckelelement 32 an den Stangenelementen 22 zu befestigen. Weiter weist das Deckelelement 32 eine entsprechende Öffnung auf, durch die die Welle 54 des Rotors hindurchgeführt ist. Wie in Fig. 23 gezeigt ist, kann die Außenkontur 48 der Halterung der Magnete 82 der Paketsegmente 78 beispielsweise rechteckig ausgebildet sein. Grundsätzlich kann aber auch jede andere Form vorgesehen sein, wie beispielweise in den Fig. 12 bis 16 gezeigt ist. Die Magnete 82 können dabei beispielweise an die Form der Außenkontur 48 der Halterung angepasst sein. Die Magnete 82 und die Halterung 80 sind hierbei beispielweise aus einem unterschiedlichen Material gefertigt.

## Patentansprüche

1. Kern (10) für einen Elektromotor, wobei der Kern (10) mehrere Paketsegmente (78) aufweist, welche jeweils mit einem Magneten (82) versehbar sind, wobei das jeweilige Paketsegment (78) jeweils wenigstens eine Öffnung (16) aufweist, um auf jeweils wenigstens ein Stangenelement (22) eines Gehäuseteils (24) eines Elektromotors aufschiebbar zu sein,
wobei
das jeweilige Paketsegment (78) eine Halterung (80) aufweist, auf deren Innenseite ein Magnet (82) befestigt ist, **dadurch gekennzeichnet, dass** die wenigstens eine Öffnung (16) im Magneten (82) ausgebildet ist, mit welcher der Magnet (82) auf das Stangenelement (22) aufgestecht werden kann, das wenigstens eine Stangenelement (22) und die Öffnung (16) parallel zu einer Drehachse des Elektromotors angeordnet sind.

2. Kern nach Anspruch 1, **dadurch gekennzeichnet, dass** die Öffnung (16) beispielsweise eckig, oval oder kreisförmig ausgebildet ist, um auf ein Stangenelement (22) mit einem entsprechenden eckigen, ovalen oder kreisförmigen Durchmesser aufgeschoben zu werden.

3. Kern nach wenigstens einem der Ansprüche 1 oder 2, **dadurch gekennzeichnet, dass**
das jeweilige Paketsegment (78) aus wenigstens einem oder mehreren Blechteilen besteht oder aus einem oder mehreren Gusskörpern, beispielsweise aus einem Sintermaterial.

4. Elektromotor mit einem Kern nach wenigstens einem der Ansprüche 1 bis 3, **dadurch gekennzeichnet, dass** der Elektromotor ein Gehäuseteil (24) mit Stangenelementen (22) aufweist, auf welche die Paketsegmente (12, 78) des Kerns (10) aufschiebbar sind und das mit einer Welle (54, 62) des Elektromotors verbunden ist, wobei wahlweise beispielsweise ein Deckelelement (32) als Abschluss an dem Gehäuseteil (24) befestigbar ist, wobei das Deckelelement (32) hierzu entsprechende Öffnungen (36), Vertiefungen und/oder Vorsprünge aufweist, in die die Enden (34) der Stangenelemente (22) des Gehäuseteils (24) durchgeführt bzw. eingeführt werden und wobei beispielsweise mittels Verformen, Verkleben oder Einrasten der Enden (34) das Deckelelement (32) an dem Gehäuseteil (24) befestigbar ist.

5. Elektromotor nach Anspruch 4, **dadurch gekennzeichnet, dass**
das Gehäuseteil (24) eine Öffnung (28) oder einen rohrförmigen Abschnitt (30) aufweist, durch welche bzw. durch welchen die Welle (54) des Elektromotors hindurchführbar ist, wobei wahlweise an dem Gehäuseteil (24) und dem Deckelelement (32) zusätzlich jeweils eine Aussparung (42, 68) für ein Lager (70) zur Lagerung der Welle (54) vorsehbar ist.

6. Elektromotor nach Anspruch 4, **dadurch gekennzeichnet, dass**
die Welle (62) des Elektromotors an dem Gehäuseteil (24) angeformt oder als separates Teil daran befestigt ist.

7. Elektromotor nach wenigstens einem der Ansprüche 4 bis 6, **dadurch gekennzeichnet, dass**
das Deckelelement (32) an seinem Umfang die Öffnungen (36), Vertiefungen und/oder Vorsprünge zum Aufnehmen der Stangenelemente (22) des Gehäuseteils (24) aufweist und das Deckelelement (32) in Form einer Scheibe mit einer Öffnung (38) zum Hindurchführen der Welle (54), mit einem rohrförmigen Abschnitt (40) zum Hindurchführen der Welle (54) oder mit einem rohrförmigen Stützabschnitt (44) zum Hindurchführen der Welle (54) und Stützen des Gehäuseteils (24) versehen ist.

8. Elektromotor nach wenigstens einem der Ansprüche 4 bis 7, **dadurch gekennzeichnet, dass**
ein Gehäuse (72) an der Welle (54) des Elektromotors ausgebildet ist oder an dieser separat befestigt ist, wobei das Gehäuse (72) mit Magneten (74) versehbar ist.

## Claims

1. Core (10) for an electric motor, with the core (10) having a plurality of stack segments (78) which can each be provided with a magnet (82), with the respective stack segment (78) in each case having at least one opening (16) in order to be pushed onto in each case at least one rod element (22) of a housing part (24) of an electric motor, with the respective stack segment (78) having a holding means (80) which has a magnet (82) mounted on its inner face, **characterized in that** the at least one opening (16) is formed in the magnet (82), it being possible for the magnet (82) to be fitted onto the rod element (22) by way of the said opening, **in that** the at least one rod element (22) and the opening (16) are arranged parallel to a rotation axis of the electric motor.

2. Core according to Claim 1, **characterized in that** the opening (16) is, for example, of rectangular, oval or circular design in order to be pushed onto a rod element (22) with a corresponding rectangular, oval or circular diameter.

3. Core according to at least one of Claims 1 and 2, **characterized in that** the respective stack segment (78) comprises at least one or more sheet-metal parts or comprises one or more cast bodies, for example from a sintered material.

4. Electric motor having a core according to at least one of Claims 1 to 3, **characterized in that** the electric motor has a housing part (24) having rod elements (22) onto which the stack segments (12, 78) of the core (10) can be pushed and which is connected to a shaft (54, 62) of the electric motor, it being possible for, for example, a cover element (32) to be selectively mounted on the housing part (24) as a termination, with the cover element (32) having corresponding openings (36), recesses and/or projections for this purpose, the ends (34) of the rod elements (22) of the housing part (24) being routed through or inserted into the said openings, recesses and/or projections, and it being possible for the cover element (32) to be mounted on the housing part (24) by means of deformation, adhesive bonding or latching of the ends (34), for example.

5. Electric motor according to Claim 4, **characterized in that** the housing part (24) has an opening (28) or a tubular section (30) through which the shaft (54) of the electric motor can be routed, it additionally being possible for in each case one cutout (42, 68) for a bearing (70) for bearing the shaft (54) to be selectively provided on the housing part (24) and the cover element (32).

6. Electric motor according to Claim 4, **characterized in that** the shaft (62) of the electric motor is integrally formed on the housing part (24) or is mounted on the said housing part as a separate part.

7. Electric motor according to at least one of Claims 4 to 6, **characterized in that** the cover element (32) has the openings (36), recesses and/or projections for receiving the rod elements (22) of the housing part (24) over its circumference, and the cover element (32) is provided in the form of a disc with an opening (38) through which the shaft (54) can be routed, with a tubular section (40) through which the shaft (54) can be routed or with a tubular supporting section (44) through which the shaft (54) can be routed and by means of which the housing part (24) can be supported.

8. Electric motor according to at least one of Claims 4 to 7, **characterized in that** a housing (72) is formed on the shaft (54) of the electric motor or is mounted separately on the said shaft, it being possible for the housing (72) to be provided with magnets (74).

## Revendications

1. Noyau (10) pour un moteur électrique, le noyau (10) présentant plusieurs segments de paquet (78) qui peuvent respectivement être munis d'un aimant (82), le segment de paquet (78) correspondant présentant à chaque fois au moins une ouverture (16) pour pouvoir être glissé sur au moins un élément en tige (22) respectif d'une partie de boîtier (24) d'un moteur électrique,
le segment de paquet (78) correspondant présentant un support (80) sur le côté intérieur duquel est fixé un aimant (82), **caractérisé en ce que** l'au moins une ouverture (16) est formée dans l'aimant (82), avec laquelle l'aimant (82) peut être enfilé sur l'élément en tige (22), **en ce que** l'au moins un élément en tige (22) et l'ouverture (16) sont disposés parallèlement à un axe de rotation du moteur électrique.

2. Noyau selon la revendication 1, **caractérisé en ce que** l'ouverture (16) est réalisée par exemple en forme rectangulaire, ovale ou circulaire pour pouvoir être glissée sur un élément en tige (22) ayant un diamètre de forme rectangulaire, ovale ou circulaire correspondant.

3. Noyau selon au moins l'une des revendications 1 ou 2, **caractérisé en ce que** le segment de paquet (78) correspondant se compose d'au moins une ou de plusieurs pièces en tôle ou encore d'un ou de plusieurs corps moulés, par exemple en un matériau fritté.

4. Moteur électrique muni d'un noyau selon au moins l'une des revendications 1 à 3, **caractérisé en ce que** le moteur électrique présente une partie de boîtier (24) munie d'éléments en tige (22) sur laquelle peuvent être glissés les segments de paquet (12, 78) du noyau (10) et qui est reliée avec un arbre (54, 62) du moteur électrique, un élément de recouvrement (32), par exemple, pouvant au choix être fixé sur la partie de boîtier (24) en tant que fermeture, l'élément de recouvrement (32) présentant à cet effet des ouvertures (36), des enfoncements et/ou des parties en saillie correspondants dans lesquels sont passées ou introduites les extrémités (34) des éléments en tige (22) de la partie de boîtier (24) et l'élément de recouvrement (32) pouvant être fixé à la partie de boîtier (24), par exemple par façonnage, collage ou enclenchement des extrémités (34).

5. Moteur électrique selon la revendication 4, **caractérisé en ce que** la partie de boîtier (24) présente une ouverture (28) ou une portion (30) de forme tubulaire à travers laquelle peut être passé l'arbre (54) du moteur électrique, un évidement (42, 68) pour un palier (70) destiné à supporter l'arbre (54) pouvant respectivement être prévu en plus, au choix, sur la partie de boîtier (24) et sur l'élément de recouvrement (32).

6. Moteur électrique selon la revendication 4, **caractérisé en ce que** l'arbre (62) du moteur électrique est façonné sur la partie de boîtier (24) ou y est fixé en tant que pièce séparée.

7. Moteur électrique selon au moins l'une des revendications 4 à 6, **caractérisé en ce que** l'élément de recouvrement (32) présente sur son pourtour les ouvertures (36), enfoncements et/ou parties en saillie pour accueillir les éléments en tige (22) de la partie de boîtier (24) et l'élément de recouvrement (32) sous la forme d'un disque est muni d'une ouverture (38) pour y faire passer l'arbre (54), d'une portion (40) de forme tubulaire pour y faire passer l'arbre (54) ou d'une portion d'appui (44) de forme tubulaire pour y faire passer l'arbre (54) et supporter la partie de boîtier (24).

8. Moteur électrique selon au moins l'une des revendications 4 à 7, **caractérisé en ce qu'**un boîtier (72) est formé sur l'arbre (54) du moteur électrique ou est fixé sur celui-ci séparément, le boîtier (72) pouvant être muni d'aimants (74).
